(19) Europäisches Patentamt
European Patent Office
Office européen des brevets

(11) Veröffentlichungsnummer: **0 284 955 B1**

(12) **EUROPÄISCHE PATENTSCHRIFT**

(45) Veröffentlichungstag der Patentschrift: **15.01.92**

(21) Anmeldenummer: **88104546.2**

(22) Anmeldetag: **22.03.88**

(51) Int. Cl.⁵: **C08L 67/02**, C08L 85/02, C08K 5/10, C08K 5/13, C08L 23/16, C08L 51/04, C08L 31/04

# (54) Stabilisierte Mischungen aus thermoplastischem Polyester und kautschukelastischem Polymerisat, Verfahren zur Herstellung dieser Mischungen und ihre Verwendung zur Herstellung von Formkörpern.

(30) Priorität: **02.04.87 DE 3711057**

(43) Veröffentlichungstag der Anmeldung: **05.10.88 Patentblatt 88/40**

(45) Bekanntmachung des Hinweises auf die Patenterteilung: **15.01.92 Patentblatt 92/03**

(84) Benannte Vertragsstaaten: **CH DE FR GB IT LI**

(56) Entgegenhaltungen:
**EP-A- 0 114 785**
**CH-A- 437 785**
**DE-A- 2 358 293**
**US-A- 3 719 727**
**EP-A- 0 238 140**
**DE-A- 2 253 207**
**DE-A- 2 705 041**

(73) Patentinhaber: **BAYER AG**
**W-5090 Leverkusen 1 Bayerwerk(DE)**

(72) Erfinder: **Köhler, Karl-Heinz, Dr.**
**Buschstrasse 165**
**W-4150 Krefeld(DE)**
Erfinder: **Kauth, Hermann, Dr.**
**Kolpingstrasse 34**
**W-4150 Krefeld(DE)**
Erfinder: **Rempel, Dieter, Dr.**
**Max-Beckmann-Strasse 35**
**W-5090 Leverkusen(DE)**
Erfinder: **Lindner, Christian, Dr.**
**Riehlerstrasse 200**
**W-5000 Koeln 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Mischungen aus Polyalkylenterephthalat und kautschukelastischem Polymerisat, die gegen thermischen Abbau durch Polyphosphonat stabilisiert sind. Die Erfindung betrifft auch ein Verfahren zur Herstellung dieser Mischungen durch Zusammenschmelzen der Komponenten sowie ihre Verwendung zur Herstellung von Formkörpern, insbesondere von Spritzguß-Formkörpern.

Mischungen aus Polyalkylenterephthalat und kautschukelastischem Polymerisat sind bekannt; vgl. beispielsweise US-PS 3 706 699, DE-OS 1 694 200 = US-PS 3 591 659, US-PS 4 086 296, DE-OS 2 248 242 = US-PS 4 013 613 + 4 097 446, DE-PS 2 343 609 = US-PS 3 864 428, DE-OS 2 364 318 = US-PS 4 080 354, DE-PS 2 348 377 = US-PS 3 919 353, DE-PS 2 444 584 = US-PS 4 022 748, US-PS 4 111 892 und 4 257 929, DE-OS 2 726 256 = US-PS 4 096 202.

Diese Mischungen werden während ihrer Herstellung und Verarbeitung thermisch belastet, und zwar in der Regel mindestens je einmal beim Zusammenschmelzen der Komponenten (erfolgt üblicherweise durch Extrusion) und bei der Verarbeitung zu Formkörpern (meistens durch Spritzguß). Die thermische Belastung führt zu einem Molekulargewichtsabbau, insbesondere auch deshalb, weil die Komponenten mindestens teilweise - noch von ihrer Herstellung herrührend - Additive, z.B. Katalysatoren, enthalten, die bei thermischer Belastung der Produkte Abbaureaktionen beschleunigen.

Es ist bekannt, thermoplastische Polyester mit Phosphorverbindungen, wie z.B. Phosphorigsäureestern, zu stabilisieren (DE-OS 2 352 037, 2 615 341, 3 036 391). Man hat auch schon vorgeschlagen, thermoplastische Polyester durch Zusatz von monomeren oder polymeren Phosphonaten gegen thermischen Abbau zu stabilisieren (FR-PS 1 446 948, US-PS 3 676 393, GB-PS 1 065 515).

Darüber hinaus hat man mit Polyphosphonaten auch schon kautschukelastische Polymerisate und Mischungen aus Polyalkylenterephthalaten und kautschukelastischen Polymerisaten stabilisiert (DE-OS 2 014 384, EP-A 114 785).

Auch die Verwendung sterisch gehinderter Phenole für die Stabilisierung von Polyestern und Vinylpolymerisaten wird beschrieben (Ullmans Encyclopädie der technischen Chemie, 4. Aufl., Bd. 8, 25-32, 39-41, Verlag Chemie, Weinheim 1974).

Es hat sich nun herausgestellt, daß die Stabilisierung von Mischungen aus thermoplastischem Polyester und kautschukelastischem Polymerisat noch nicht allen Anforderungen gerecht wird. Da unerwünschte Abbaureaktionen regelmäßig auch zu einer Verschlechterung mechanischer Eigenschaften führen, war es Aufgabe der Erfindung, besser stabilisierte Mischungen aus thermoplastischem Polyester und kautschukelastischem Polymerisat bereitzustellen.

Überraschenderweise wurde nun gefunden, daß bestimmte Polyphosphonate diese Aufgabe lösen.

Gegenstand der Erfindung sind also Mischungen aus

65 bis 99, vorzugsweise 75 bis 90, Gew.-% Polyalkylenterephthalat P und

35 bis 1, vorzugsweise 25 bis 10, Gew.-% kautschukelastischem Polymerisat Q mit einer Glasübergangstemperatur unter -30 °C, vorzugsweise unter -40 °C,

wobei sich die Prozentangaben auf die Summe P + Q beziehen,

dadurch gekennzeichnet, daß die Mischungen 0,01 bis 3, vorzugsweise 0,1 bis 1, Gew.-%, bezogen auf die Summe P + Q, Polyphosphonat einer relativen Viskosität von 1,05 bis 1,40, vorzugsweise von 1,07 bis 1,30 (gemessen en einer Lösung von 0,5 g Polyphosphonat in 100 g Methylenchlorid bei 25 °C) mit wiederkehrenden Einheiten der Formel

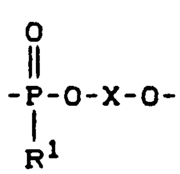

(I)

enthalten, worin

$R^1$ = $C_1$-$C_3$-Alkyl, $C_6$-$C_{12}$-Aryl oder $C_7$-$C_{15}$-Arylalkyl,

X =

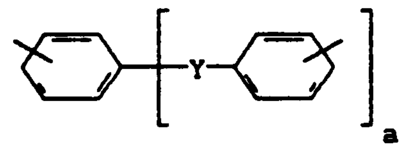

Y = $C_1$-$C_3$-Alkylen,
-O-, -S-,

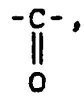

$-SO_2-$
oder eine Einfachbindung und

a = Null oder 1

bedeuten.

Die erfindungsgemäß stabilisierten Mischungen lassen sich bei höheren Schmelzetemperaturen und längeren Schmelzestandzeiten ohne nennenswerten Eigenschaftsverlust zu Formkörpern verarbeiten. Diese weisen einen geringeren Molekulargewichtsabbau und höhere mechanische Eigenschaften auf als Formkörper, die mit üblichen Phosphiten, Phosphaten, Phosphonaten oder Polyphosphonaten stabilisiert sind.

Polyalkylenterephthalate P im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate P lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate P enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate P können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate P können neben Ethylenglykol- bzw. Butandiol-1,4-resten bis zu 20 Mol-%, vorzugsweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,3, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-$\beta$-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate P können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden.

Beispiele bevorzugter Verzweigungsmittel sind Trimesinsäure, Trimellithsäure, Trimethylolethan und -propan und Pentaerythrit.

Besonders bevorzugt sind Polyalkylenterephthalate P, die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50, vorzugsweise 1 bis 30, Gew.-% Polyethylenterephthalat und 50 bis 99, vorzugsweise 70 bis 99, Gew.-% Polybutylenterephthalat.

Die als Komponente P vorzugsweise verwendeten Polyalkylenterephthalate besitzen im allgemeinen eine Intrinsic-Viskosität von 0,4 bis 1,5 dl/g, vorzugsweise 0,6 bis 1,3 dl/g, insbesondere 1,0 bis 1,3 dl/g, jeweil gemessen in Phenol/o-Dichlorbenzol (1:1 Gewichtsteile) bei 25 °C im Ubbelohde-Viskosimeter.

Die Polymerisate Q mit einer Glasübergangstemperatur unter -30 °C umfassen Copolymerisate - insbesondere Pfropfcopolymerisate - mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind. Bevorzugte Polymerisate Q sind mindestens partiell vernetzt und besitzen Gelgehalte von über 20, vorzugsweise über 40 Gew.-%, insbesondere über 60 Gew.-%.

Bevorzugte Polymerisate Q sind Ethylen/Vinylacetat-Copolymerisate mit 15 bis 60 Gew.-% Vinylacetatresten und Schmelzindices von nicht fließfähig bis 1,000, vorzugsweise von 0,1 bis 20, gemessen bei 180 °C und 2,16 kg Belastung nach DIN 53 735.

Bevorzugte Polymerisate Q sind z.B. auch die sogenannten EPM- bzw. EPDM-Kautschuke, in denen das Gewichtsverhältnis von Ethylen- zu Propylenresten im Bereich von 40:60 bis 65:35 liegt.

Die Mooney-Viskositäten ($ML_{1-4}$/100 °C) der EPM- bzw. EPDM-Kautschuke können zwischen 25 bis 200, vorzugsweise zwischen 35 bis 120, liegen.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1,000 C-Atome aufweisen können. Als geeignete Dien-Monomere im EPDM seien beispielsweise genannt: konjugierte Diene, z.B. Isopren und Butadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadienund 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene.

Bevorzugt sind die nichtkonjugierten Diene Hexadien-1,5, Ethyliden-norbornen oder Dicyclopentadien. Der Diengehalt im EPDM beträgt vorzugsweise 0,5 bis 10 Gew.-%, bezogen auf EPDM.

Derartige EPM- bzw. EPDM-Kautchuke sind z.B. in der DE-OS 2 808 709 beschrieben.

Bevorzugte Polymerisate Q sind auch selectiv hydrierte Blockcopolymerisate eines vinylaromatischen Monomeren und eines konjugierten Diens. Diese Blockcopolymerisate sind bekannt. Im allgemeinen kann für die Herstellung der geeigneten Blockcopolymerisate aus Styrol, α-Methylstyrol, Vinyltoluol usw. und aus konjugierten Dienen, wie Butadien, Isopren usw., die für die Herstellung von Styrol-Dien-Blockcopolymerisaten verwendete Technologie benutzt werden, die in "Encyclopedia of Polymer Science and Technology", Bd. 15, Interscience, N.Y. (1971) auf den Seiten 508 ff. beschrieben ist. Die selektive Hydrierung kann auf an sich bekannte Weise durchgeführt werden, wobei die ethylenischen Doppelbindungen im wesentlichen vollständig hydriert werden, während die aromatischen Doppelbindungen im wesentlichen unbeeinflußt bleiben. Derartige selektiv hydrierte Blockcopolymerisate werden z.B. in der DE-OS 3 000 282 beschrieben.

Besonders bevorzugte Polymerisate Q sind Pfropfpolymerisate.

Bevorzugte Pfropfpolymerisate Q besitzen mittlere Teilchendurchmesser $d_{50}$ von 0,05 bis 1, vorzugsweise von 0,1 bis 0,8, insbesondere von 0,1 bis 0,6 µm.

Der mittlere Teilchendurchmesser $d_{50}$ ist der Durchmesser, oberhalb und unterhalb dessen jeweils 50 Gew.-% der Teilchen liegen. Er kann mittels Ultrazentrifugen-Messungen (W.Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14, (1970), 111-129) bestimmt werden.

Bevorzugte Pfropfpolymerisate Q sind vernetzt und haben Gelgehalte von mindestens 50 Gew.-%, vorzugsweise mindestens 80 Gew.-% und insbesondere von mindestens 90 Gew.-%, bezogen auf Pfropfpolymerisat Q.

Der Gelgehalt vernetzter Dienkautschuke wird bei 25 °C in Toluol, der Gelgehalt vernetzter Acrylatkautschuke bei 25 °C in Dimethylformamid bestimmt (M. Hoffmann, H.Krömer, R. Kuhn, Polymeranalytik I und II, Georg Thieme Verlag Stuttgart 1977).

Bevorzugte Pfropfpolymerisate Q sind Pfropfpolymerisate von 15 bis 60, vorzugsweise 20 bis 50, insbesondere 25 bis 40 Gew.-%, wenigstens eines Vinyl- oder Vinylidenmonomeren aus der Reihe Styrol, α-Methylstyrol, Acrylnitril, $C_1$-$C_8$-Alkylacrylat, $C_1$-$C_8$-Alkymethacrylat, Hydroxy-$C_2$-$C_8$-alkyl(meth)acrylat, Epoxy-$C_2$-$C_8$-alkyl(meth)acrylat auf 40 bis 85, vorzugsweise 50 bis 80, insbesondere 60 bis 75 Gew.-%, teilchenförmigem vernetztem Dien- oder Acrylatkautschuk, jeweils bezogen auf Pfropfpolymerisat Q.

Bevorzugte Pfropfmonomere sind Methylmethacrylat sowie Mischungen aus Styrol und Methylmethacrylat und Mischungen aus Styrol und Acrylnitril.

Bevorzugte Dienkautschuke sind vernetzte Homo- und/oder Copolymerisate aus konjugierten $C_4$-$C_6$-Dienen, Bevorzugtes Dien ist Butandien-1,3. Die Diencopolymerisate können neben den Dienresten bis zu

30 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$-$C_4$-Alkoholen, wie z.B. Methylacrylat, Ethylacrylat, Methylmethacrylat, Ethylmethacrylat, enthalten.

Die Herstellung der Dienkautschuk-Pfropfgrundlage und der daraus hergestellten Pfropfpolymerisate wird z.B. in "Methoden der Organischen Chemie" (Houben-Weyl), Bd.14/1, Georg Thieme Verlag, Stuttgart 1961, S. 393-406, sowie in Ullmanns Ecyclopädie der technischen Chemie, 4. Auflage, Bd. 19, Verlag Chemie, Weinheim, 1981, S. 279 bis 284, beschrieben.

Bevorzugte Pfropfgrunglagen auf Basis Acrylatkautschuk sind Polymerisate, die durch Polymerisation von $C_1$-$C_8$-Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Bevorzugte Beispiele für vernetzende Monomere mit mehr als einer copolymerisierbaren Doppelbindung sind Ester ungesättigter $C_3$-$C_{12}$-Monocarbonsäure und ungesättigter einwertiger $C_3$-$C_{12}$-Alkohole oder gesättigter $C_2$-$C_{20}$-Polyole mit 2 bis 4 OH-Gruppen, wie z.B. mehrfach ungesättigte heterocyclische Verbindungen, wie Trivinyl-, Triallylcyanurat und -isocyanurat; insbesondere Triallylcyanurat; polyfunktionelle Vinylverbindungen, wie Di-und Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Tris-acryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrunglage, zu verwenden.

Acrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und anpolymerisiertes Acrylatmonomer als Schale enthalten.

Der Anteil des Polydien-Kerns in solchen mehrschaligen Kautschuken kann 0,1 bis 80, bevorzugt 10 bis 50 Gew.-% betragen. Schale(n) und Kern können unabhängig voneinander teilvernetzt oder hochvernetzt sein.

Bevorzugte gepfropfte Acrylatkautschuke sind solche, die

a) mit cyclischen trifunktionellen Comonomeren wie Triallylcyanurat oder Triallylisocyanurat vernetzt sind (beschrieben in DE-OS 3 039 114);

b) einen Polybutadien-Kern enthalten (beschrieben in DE-OS 3 039 115);

c) hergestellt wurden "in Abwesenheit von Suspendiermittel" (beschrieben in DE-OS 3 117 052).

Bei der Herstellung der Pfropfpolymerisate Q durch Pfropfcopolymerisation, die üblicherweise in Gegenwart von Radikalstartern, z.B. wasserlöslichen Initiatoren, Emulgatoren oder Komplexbildnern/Pfropfaktivatoren sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfpolymerisate Q im Sinne der Erfindung sind deshalb durch Polymerisation von Pfropfmonomeren in Gegenwart des Kautschuklatex erhaltene Produkte, genau genommen also im allgemeinen ein Gemisch aus Pfropfcopolymerisat und freiem (Co)polymerisat der Pfropfmonomeren.

Die erfindungsgemäßen Mischungen weisen optimale Eigenschaften auf, wenn die Menge an freiem (Co)Polymerisat 15 Gew.-%, vorzugsweise 10 Gew.-%, insbesondere 7 Gew.-%, bezogen auf Komponente Q, nicht übersteigt. Der Staudinger-Index dieser freien (Co)Polymerisate soll weniger als 0,6 dl/g, vorzugsweise weniger als 0,4 dl/g betragen, gemessen im Dimethylformamid bei 25 °C.

Bevorzugte gepfropfte Dienkautschuke sind z.B. in der DE-PS 2 348 377 und in den DE-OS 2 927 576, 3 025 605, bevorzugte gepfropfte Acrylatkautschuke z.B. in der DE-PS 2 444 584 und in den DE-OS 2 726 256, 3 039 114, 3 039 115, 3 117 052 beschrieben.

Bevorzugte als Stabilisatoren erfindungsgemäß zu verwendende Polyphosphonate sind Verbindungen mit wiederkehrenden Einheiten I, worin

$R^1$ Methyl oder Phenyl und

X mindestens einen der Reste

Phenylen 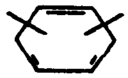

Bisphenylen 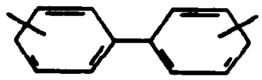

$C_1$-$C_3$-Alkylenbisphenylen 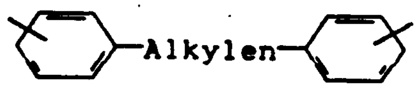

Sulfonylbisphenylen 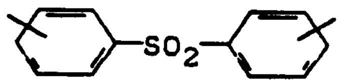

Oxybisphenylen 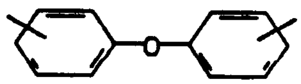

Thiobisphenylen 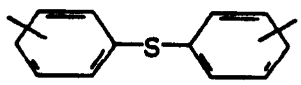

Carbonylbisphenylen 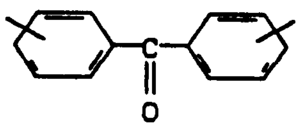

bedeuten.

Besonders bevorzugte erfindungsgemäß zu verwendende Polyphosphonate sind solche mit wiederkehrenden Einheiten I, worin

$R^1$ Methyl und

X 1,4-Phenylen, 4,4'-Bisphenylen oder

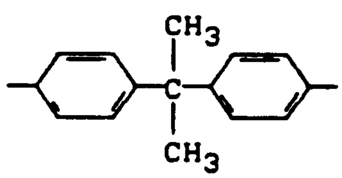

bedeuten.

Die Polyphosphonate enthalten meistens die von ihrer Herstellung herrührenden Endgruppen, entsprechen also der Formel

$E^1$ - ...wiederkehrende Einheiten... - $E^2$,

worin

$E^1$ = -O-$R^2$, -OH oder -O-X-OH
mit $R^2$ = $C_6$-$C_{10}$-Aryl,

$E_2$ =

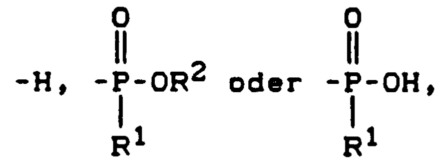

oder

vorzugsweise

$E_1$ =

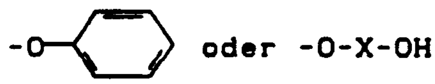

oder

$E_2$ =

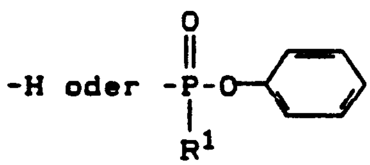

oder

bedeuten.

Die erfindungsgemäß als Stabilisatoren zu verwendenden Polyphosphonate sind entweder bekannt oder können ohne Schwierigkeiten analog bekannten Verfahren hergestellt werden. Vorzugsweise wählt man die Umesterung von Phosphonsäurearylester der Struktur III (US-PS 2 682 522, DE-OS 2 925 207, DE-OS 2 944 093)

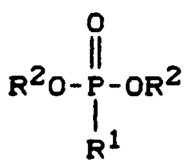

(III)

worin

$R^1$ die oben angegebene Bedeutung hat und

$R^2$ für $C_6$-$C_{10}$-Aryl, vorzugsweise Phenyl, steht,

mit Bisphenolen der Formel IV

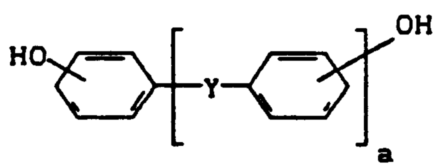

(IV)

worin Y und a die oben angegebene Bedeutung besitzen,
in der Schmelze bei 150 bis 320° C in Gegenwart eines Katalysators unter Abdestillieren der flüchtigen Bestandteile.

Besonders bevorzugte Bisphenole IV sind Hydrochinon, Bisphenol-A und 4,4'-Dihydroxydiphenyl.

Als geeignete Katalysatoren können für die Umesterung beispielsweise eingesetzt werden:
alkalische Katalysatoren, wie z.B. Alkaliphenolate, Alkalihydride, Erdalkalihydride, Alkaliamide oder Erdalkaliamide, neutrale Katalysatoren, wie z.B. Tetraalkyltitanate, Trialkylzinnacylate, Dialkylzinnoxide, Dialkylzinnacylate, aber auch Imidazol und Erdalkalihalogenide.

Die erfindungsgemäß einzusetzenden Polyphosphonate können gegebenenfalls durch geringe Mengen mehrfunktioneller Verbindungen verzweigt sein. Die Verzweigermenge beträgt weniger als 3 Mol-%,

bezogen auf eingesetzte Menge Bisphenol IV. Als Verzweiger sind trifunktionelle und tetrafunktionelle Hydroxyverbindungen, wie z.B. 4,6-Dimethyl-2,4,6-tri-(4-hydroxyphenyl)heptan; 1,3,5-Tri-(4-hydroxytriphenylmethyl)benzol, trifunktionelle oder tetrafunktionelle Carbonsäurearylester, wie z.B. Trimesinsäuretriphenylester und Pyromellithsäuretetraphenylester, und Phosphorsäuretriarylester, wie z.B. Triphenylphosphat, geeignet.

Die Wirkung der erfindungsgemäß als Stabilisatoren einzusetzenden Polyphosphonate läßt sich durch weiteren Zusatz von 0,01 bis 3, vorzugsweise 0,1 bis 2, Gew.-%, bezogen auf die Summe P + Q, phenolisches Antioxydans noch steigern.

Geeignete phenolische Antioxidantien sind in Ullmans Encyclopädie der technischen Chemie, 4. Aufl., Bd. 8, S. 25-31, beschrieben.

Bevorzugte phenolische Antioxidantien sind Verbindungen der Formel

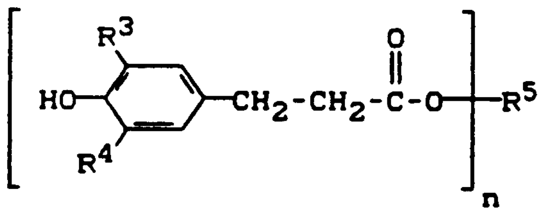

(II)

worin

- $R^3$ $C_4$-$C_8$ tert.-Alkyl, vorzugsweise tert.-Butyl, tert.-Amyl und tert.-Diisobutyl,
- $R^4$ $C_1$-$C_8$-Alkyl, vorzugsweise Methyl, tert.-Butyl, tert.-Amyl und tert.-Diisobutyl,
- $R^5$ $C_8$-$C_{18}$-Alkyl, vorzugsweise $C_{10}$-$C_{18}$-n-Alkyl, insbesondere $C_{14}$-$C_{18}$-n-Alkyl, oder $C_2$-$C_{12}$-Alkylen und
- n 1 oder 2, vorzugsweise 1,

bedeuten.

Diese Verbindungen II und Verfahren zu ihrer Herstelung sind aus DE-AS 1 201 343, DE-OS 1 543 644 und DE-OS 1 503 327 bekannt.

Die Stabilisierung der kautschukelastischen Polymerisate Q mit dem phenolischen Antioxydans kann nach bekannten Verfahren, z.B. in der Latexform von Q vor dessen weiteren Aufarbeitung erfolgen.

Die erfindungsgemäßen Mischungen können neben den obligatorischen Stabilisatoren und phenolischen Antioxidantien übliche Zusätze, wie z.B. Entformungshilfsmittel, Mittel zur Verbesserung der Oberflächengleiteigenschaften, Fleißhilfsmittel, Kristallisationshilfsmittel, Antistatika, UV-Stabilisatoren, Stabilisatoren gegen hydrolytischen Abbau, anorganische und/oder organische Farbpigmente bzw. Farbstoffe und übliche Flammschutzmittel enthalten.

Die Herstellung der erfindungsgemäßen Mischungen kann in üblichen Mischaggregaten, wie Walzen, Knetern, Ein-und Mehrwellenextrudern erfolgen. Die Stabilisatoren können den Komponenten P und/oder Q bei deren Herstellung, nach ihrer Herstellung (z.B. durch Auftrudeln auf das Granulat) oder beim Mischen der Komponenten P und Q, zweckmäßigerweise in Form eines Konzentrats (Pulver oder Granulat) in Polyester P und/oder Polymerisat Q, zugesetzt werden.

Weiterer Gegenstand der Erfindung ist also ein Verfahren zur Herstellung stabilisierter Mischungen aus Polyalkylenterephthalat und kautschukelastischem Polymerisat durch Zusammenschmelzen der Komponenten bei Temperaturen, die vorzugsweise mindestens 20 °C und höchstens 70 °C über dem Schmelzpunkt des Polyesters P liegen.

Das Herstellverfahren kann diskontinuierlich oder kontinuierlich unter Bedingungen durchgeführt werden, bei denen eine Oxidation weitgehend ausgeschlossen ist, d.h. unter inertem Schutzgas, wie z.B. Stickstoff, Kohlendioxid oder Argon, und/oder unter vermindertem Druck.

Die erfindungsgemäßen Mischungen können einer thermischen Nachbehandlung in der festen Phase bei Temperaturen oberhalb 100 °C, vorzugsweise oberhalb 180 °C, unterzogen werden.

Die erfindungsgemäßen Mischungen können zur Herstellung von Formkörpern, die für hohe Stoßbelastungen geeignet sind, wie z.B. Stoßfänger, Spoiler, Rammleisten im Kfz-Bereich, dienen.

Die Bedingungen für die Verarbeitung der erfindungsgemäßen Mischungen sollten so gewählt werden, daß die Massetemperatur der Schmelze mindestens 20 °C, höchstens 50 °C, oberhalb des Schmelzpunktes des Polyesters liegt. Die Verweilzeit der Schmelze in der Apparatur sollte unter den angegebenen Temperaturbedingungen nicht länger als 9 Minuten, vorzugsweise nicht länger als 6 Minuten, sein.

Bevorzugt werden Verarbeitungsbedingungen, bei denen die Massetemperaturen nicht höher als 270 °C

und sie Schmelzestandzeiten nicht höher als 9 Minuten sind; besonders bevorzugt werden Verarbeitungsbedingungen, insbesondere für Polybutylenterephthalat-Mischungen, bei denen die Massetemperaturen nicht höher als 260 °C und die Schmelzestandzeiten nicht höher als 6 Minuten liegen.

Die erfindungsgemäßen Mischungen zeigten unter thermischer Belastung einen stark verminderten Molekulargewichtsabbau, erkennbar an der geringen Viskositätsminderung und an der geringen Zunahme des Gehalts an Carboxyl-Endgruppen. Dies bedeutet aber auch ein weitgehendes Erhalten der hervorragenden mechanischen Eigenschaften, wie z.B: gutes Tieftemperatur-Bruchverhalten und hohe Reißdehnung der Formkörper.

Beispiele

I. Eingesetzte Komponenten

1. PBT
Polybutylenterephthalat mit einer Intrinsic-Viskosität von 1,20 dl/g, gemessen in Phenol/o-Dichlorbenzol (Gewichtsverhältnis 1:1) bei 25 °C im Ubbelohde-Viskosimeter (Polyester P).
2. Polymerisat
Pfropfpolymerisat mit einem mittleren Teilchendurchmesser $d_{50}$ von 0,4 µm aus 75 Gew.-% Polybutadien-Pfropfgrunglage und 25 Gew.-% Pfropfauflage aus 72 Gewichtsteilen Styrol und 28 Gewichtsteilen Acrylnitril (Polymerisat Q), enthaltend 1,8 Gew.-% Mischung handelsüblicher Stabilisatoren/Antioxydantien B.
3. Polymerisat
analog 2 mit 1,8 Gew.-% Antioxydans II.
4. Stabilisator Ia (erfindungsgemäß):
Dihydroxydiphenylpolymethylphosphonat, hochmolekular (Herstellung s.u.).
5. Stabilisator Ib (erfindungsgemäß):
Dihydroxydiphenylpolymethylphosphonat, oligomer (Herstellung s.u.).
6. Stabilisator Ic (erfindungegemäß):
Bisphenol-A-polymethylphosphonat, oligomer (Herstellung s.u.).
7. Antioxydans II
Octadecyl-3-(3,5-di-tert.-butyl-4-hydroxyphenyl)propionat.
8. Stabilisator A (Vergleich)

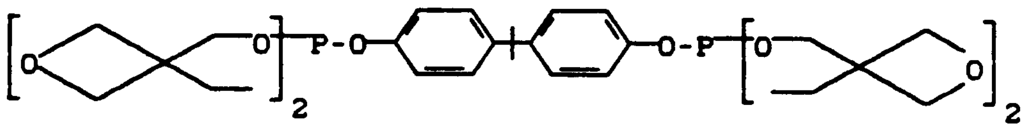

entsprechend DE-OS 2 615 341
9. Stabilisator B (Vergleich)
Kombination üblicher Stabilisatoren:

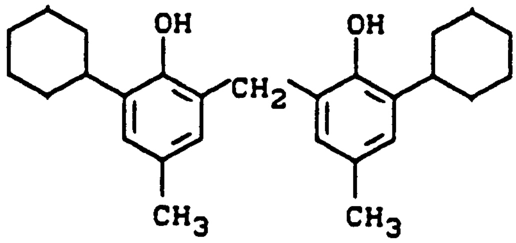

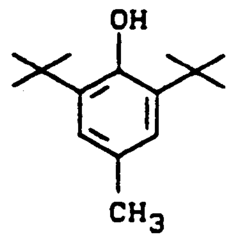

0,2 Gew.-Teile    0,8 Gew.-Teile

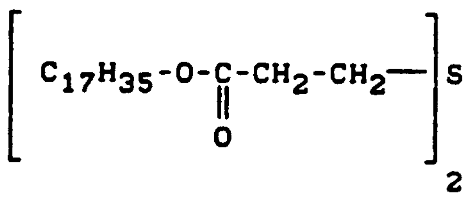

0,8 Gew.-%

10. übliche Verarbeitungshilfsmittel.

II. Herstellung der Polyphosphonate

Stabilisator Ia

25 Mol (4.650 g) 4,4'-Dihydroxydiphenyl,
0,125 Mol (40,7 g) Triphenylphosphat,
25,1 Mol (6,215 g) Methanphosphonsäurediphenylester und
4,13 mMol (0,5 g) Natriumphenolat
wurden unter Stickstoff bei 250° C intensiv in einem Autoklaven vermischt. Innerhalb von 3 Stunden wurde unter einem von 250 auf 100 mbar absinkenden Druck und bei einer von 250° C auf 265° C ansteigenden Temperatur Phenol über eine auf 100° C beheizte Kolonne abdestilliert. Anschließend wurde die Umesterung 5 Stunden unter einem allmählich auf 0,3 mbar absinkenden Druck und einer auf 310° C ansteigenden Temperatur fortgesetzt, wobei die Viskosität der Schmelze anstieg. Man belüftete mit Stickstoff, leiß das Polyphosphenat bei stillstehendem Rührer absitzen und erhielt 5,3 kg Polyphosphonat durch Abspinnen unter Druck und Granulieren des Schmelzstranges. Das Polyphosphonat hatte eine relative Viskosität von $\eta$rel. = 1,28 (gemessen in Methylenchlorid, 0,5 g/100 ml Lösung).

Stabilisator Ib

25 Mol (4.650 g) 4,4'-Dihydroxydiphenyl,
25,25 Mol (6.262 g) Methanphosphonsäurediphenylester und
4,13 mMol (0,5 g) Natriumphenolat
wurden analog der Herstellung von Ia umgesetzt. Man erhielt 5,5 kg Polyphosphonat mit einer relativen Viskosität von $\eta$rel. = 1,15 (gemessen in Methylenchlorid, 0,5 g/100 ml Lösung).

Stabilisator Ic

253 g (1,02 Mol) Methanphosphonsäurediphenylester,
228 g (1,0 Mol) Bisphenol-A und
0,1 g Natriumphenolat
wurden unter Stickstoff bei 200° C gemischt. Innerhalb von 2,5 Stunden wurde unter einem von 300 auf 50 mbar absinkenden Druck und bei einer von 200° C auf 240° C ansteigenden Temperatur freigesetztes Phenol über eine Kolonne abdestilliert.

Anschließend setzte man die Kondensation 6 Stunden unter einem allmählich auf 0,3 mbar absinkenden

Druck und einer auf 280 °C ansteigenden Temperatur fort. Man belüftete mit Stickstoff und isolierte 260 g eines Polyphosphonats mit einer relativen Viskosität von $\eta$rel. = 1,09 (gemessen in Methylenchlorid, 0,5 g/100 ml Lösung.

III. Herstellung thermoplastischer Formmassen

Die Komponenten, die in Form von Granulat (PBT), als Pulver (Polymerisat Q), als Pulvermischung in gemahlenem PBT (Stabilisatoren und Antioxidantien) bzw. in Granulatform als Konzentrat in PBT (Entformungsmittel) vorlagen, wurden auf einem Zweiwellenextruder in der Schmelze gemischt und extrudiert (Massetemperaturen: 270 bis 280 °C, Durchsatz: 8 kg/Stunde, Schneckendrehzahl: 100 U/Minute). Der Schmelzestrang wurde in Wasser gekühlt, trocken geblasen, granuliert und bei erhöhter Temperatur getrocknet. Das getrocknete Granulat wurde auf einer üblichen Spritzgußmaschine bei Massetemperaturen von 250 bis 270 °C, Formtemperaturen von 80 °C und einer Verweilzeit im Schneckenzylinder von 6 bis 9 Minuten zu Norm-Prüfstäben verspritzt.

IV. Prüfung der Eigenschaften

Die Prüfung der mechanischen Eigenschaften erfolgte an Norm-Prüfstäben nach DIN-Normen. Die Ergebnisse sind in den nachfolgenden Tabellen zusammengestellt. Dabei bedeuten:

- $\eta$rel.: relative Lösungsviskosität, gemessen in Phenol/o-Dichlorbenzol-Gemisch (1:1 Gewichtsteile) bei 25 °C, (0,5 g/100 ml), Ubbelohde-Viskosimeter
- $a_k$: Kerbschlagzähigkeit nach Charpy (kJ/$m^2$), DIN 53 453
- $\epsilon_R$: Reißdehnung, gemessen nach DIN 53 455
- M.T.: Masseverarbeitungstemperatur.

Beispiele 1-6, Vergleichsbeispiele 1 und 2

Stabilisierung von PBT/Kautschuk-Mischungen

Die Komponenten wurden in den aus der Tabelle zu entnehmenden Mengen (Gew.-%) eingesetzt. Aus den Lösungsviskositäten der durch Extrusion bei 250 °C und besonders bei 270 °C hergestellten Granulate und den mechanischen Werten (Kerbschlagzähigkeit bei tiefen Temperaturen und Reißdehnung) resultiert klar die Überlegenheit der erfindungsgemäß einzusetzenden Stabilisatoren.

<u>Tabelle 1</u>

| Beispiel-Nr. | | Vgl. 1 | Vgl. 2 | 1 | 2 | 3 | 4 | 5 | 6 |
|---|---|---|---|---|---|---|---|---|---|
| <u>Komponenten (%)</u> | | | | | | | | | |
| 1 PBT | | 76,4 | 76,55 | 76,4 | 76,55 | 76,4 | 76,55 | 76,55 | 76,4 |
| 2 Polymerisat mit Stab. C | | 23,0 | 23,0 | 23,0 | 23,0 | 23,0 | 23,0 | 23,0 | 23,0 |
| 10 Hilfsmittel | | 0,3 | 0,3 | 0,3 | 0,3 | 0,3 | 0,3 | 0,3 | 0,3 |
| 8 (Stab. A) | | 0,3 | 0,15 | - | - | - | - | - | - |
| 4 (Stab. Ia) | | - | - | 0,3 | 0,15 | - | - | - | - |
| 5 (Stab. Ib) | | - | - | - | - | 0,3 | 0,15 | - | - |
| 6 (Stab. Ic) | | - | - | - | - | - | - | 0,15 | 0,3 |
| Prüfung | M.T.[1] (°C) | | | | | | | x | |
| $\eta_{rel.}$, Granulat | - | 1,597 | 1,683 | 1,695 | 1,642 | 1,631 | 1,701 | 1,701 | 1,632 |
| $\eta_{rel.}$, Prüfstab | 250 | 1,613 | 1,626 | 1,690 | 1,631 | 1,717 | | | 1,611 |
| $\eta_{rel.}$, Prüfstab | 270 | 1,514 | 1,602 | 1,696 | 1,608 | 1,614 | | | 1,604 |
| $CO_2H$ %, Prüfstab | 250 | 0,15 | 0,13 | | 0,09 | 0,07 | | | 0,12 |
| $CO_2H$ %, Prüfstab | 270 | 0,18 | 0,20 | 0,17 | 0,16 | 0,15 | | | 0,13 |
| $a_k$, Duktilbruchgrenze (°C) | 250 | - 10 | - 15 | - 25 | - 30 | - 25 | - 25 | - 25 | - 25 |
| | 270 | - 10 | - 10 | - 15 | - 20 | - 15 | - 15 | | - 15 |
| $\varepsilon_R$ (%) | 250 | 40 | 50 | 150 | 108 | 150 | 200 | 234 | 190 |
| $\varepsilon_R$ (%) | 270 | 30 | 40 | 60 | 95 | 60 | 93 | 62 | 86 |

1) 6 min Schmelze-Standzeit x = 9 min Schmelze-Standzeit

Die Beispiele 1 bis 6 der Tabelle 1 zeigen den Einfluß verschiedener Polyphosphonate in unterschiedlichen Konzentrationen auf die Verarbeitungsstabilität und die mechanischen Formteileigenschaften der Formassen aus PBT und kautschukelastischem Polymerisat. Im Vergleich zu üblichen Phosphit-Stabilisatoren (s. Vergleichsbeispiele 1 und 2) bewirken die erfindungsgemäß eingesetzten Stabilisatoren einen geringeren Molekulargewichtsabbau, gekennzeichnet durch eine geringere Viskositätsabnahme und einen geringeren Carboxyl-Endgruppengehalt des Polyesters, und ein höheres mechanisches Eigenschaftsniveau,

gekennzeichnet durch ein verbessertes Duktilbruchverhalten und eine höhere Reißdehnung.

Beispiele 7 und 8, Vergleichsbeispiele 3 und 4

Diese Beispiele zeigen den zusätzlichen Einfluß des Antioxydans II im kautschukelastischen Polymerisat (Komponente 3) auf die Produkteigenschaften.

Tabelle 2 Stabilisator-Kombinationen

| Beispiel-Nr. | | 7 | 8 | Vgl. 3 | Vgl. 4 |
|---|---|---|---|---|---|
| Komponenten (%) | | | | | |
| 1 PBT | | 76,55 | 76,55 | 76,55 | 76,55 |
| 10 Hilfsmittel | | 0,30 | 0,30 | 0,30 | 0,30 |
| 2 Polymerisat mit Stab. B | | 23,0 | - | 23,0 | - |
| 3 Polymerisat mit Antioxydans II | | - | 23,0 | - | 23,0 |
| 6 (Stab. Ic) | | 0,15 | 0,15 | - | - |
| 8 (Stab. A) | | - | - | 0,15 | 0,15 |
| Prüfung | M.T. (°C) | | | | |
| $\eta_{rel.}$, Granulat | - | 1,649 | 1,745 | 1,704 | |
| $a_k$, Duktilbruchgrenze (°C) | 250 | - 25 | - 25 | - 25 | - 25 |
| | 270 | - 10 | - 20 | - 20 | - 15 |
| $\epsilon_R$ (%) | 250 | 66 | 105 | 74 | 102 |
| | 270 | 90 | 126 | 30 | 80 |

## Patentansprüche

**1.** Mischung aus

65 bis 99 Gew.-% Polyalkylenterephthalat P und

35 bis 1 Gew.-% kautschukelastischem Polymerisat Q mit einer Glasübergangstemperatur unter -30 ° C,

wobei sich die Prozentangaben auf die Summe P + Q beziehen,

dadurch gekennzeichnet, daß die Mischungen 0,01 bis 3 Gew.-%, bezogen auf die Summe P + Q, Polyphosphonat einer relativen Viskosität von 1,05 bis 1,40 (gemessen an einer Lösung von 0,5 g Polyphosphonat in 100 g Methylenchlorid bei 25 ° C) mit wiederkehrenden Einheiten der Formel

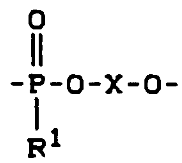

(I)

enthalten, worin

R¹ = $C_1$-$C_3$-Alkyl, $C_6$-$C_{12}$-Aryl oder $C_7$-$C_{15}$-Aryl-alkyl,
X =

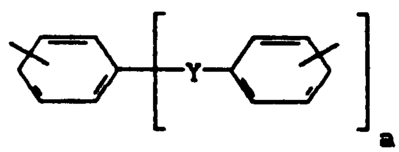

Y = $C_1$-$C_3$-Alkylen,
-O-, -S-,

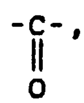

$-SO_2-$
oder eine Einfachbindung und
a = Null oder 1

bedeuten.

**2.** Mischungen nach Anspruch 1, dadurch gekennzeichnet, daß sie

75 bis 90 Gew.-% Polyalkylenterephthalat P und
25 bis 10 Gew.-% Polymerisat Q enthalten.

**3.** Mischungen nach Ansprüchen 1 und 2, dadurch gekennzeichnet, daß sie 0,1 bis 1 Gew.-% Polyphosphonat enthalten.

**4.** Mischungen nach Ansprüchen 1 bis 3, dadurch gekennzeichnet, daß das Polyphosphonat wiederkehrende Einheiten der Formel I enthält, worin

$R^1$ Methyl und
X 1,4-Phenylen, 4,4'-Bisphenylen oder $C_1$-$C_3$-Alkylenbisphenylen

bedeuten.

**5.** Mischungen nach Ansprüchen 1 bis 4, dadurch gekennzeichnet, daß sie 0,1 bis 2 Gew.-% phenolisches Antioxidans enthalten.

**6.** Mischungen nach Anspruch 5, dadurch gekennzeichnet, daß das phenolische Antioxidans der Formel

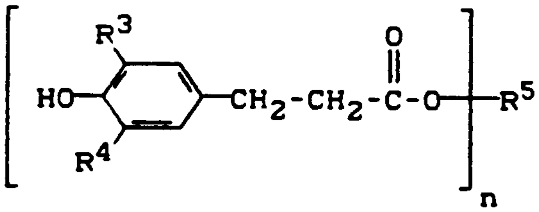

(II)

entspricht, worin

$R^3$ $C_4$-$C_8$ tert.-Alkyl,
$R^4$ $C_1$-$C_8$-Alkyl,
$R^5$ $C_8$-$C_{18}$-Alkyl oder $C_2$-$C_{12}$-Alkylen und
n 1 oder 2

bedeuten.

**7.** Mischungen nach Anspruch 6, dadurch gekennzeichnet, daß

$R^3$, $R^4$ tert.-Butyl, tert.-Amyl oder tert.-Diisobutyl,
$R^5$ $C_{17}H_{35}$ und
n 1 bedeuten.

**8.** Verfahren zur Herstellung der Mischungen nach Ansprüchen 1 bis 7 durch Zusammenschmelzen der Komponenten.

**9.** Verwendung der Mischungen nach Ansprüchen 1 bis 7 zur Herstellung von Formkörpern.

## Claims

**1.** A blend of
65 to 99% by weight polyalkylene terephthalate P and
35 to 1% by weight rubber-elastic polymer Q having a glass transition temperature below -30 °C,
the percentages being based on the sum of P + Q,
characterized in that the blends contain 0.01 to 3% by weight, based on the sum of P + Q, polyphosphonate having a relative viscosity of 1.05 to 1.40 (as measured on a solution of 0.5 g polyphosphonate in 100 g methylene chloride at 25 °C) and containing recurring units corresponding to the formula

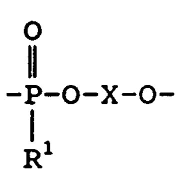

(I)

in which

$R^1$ = $C_{1-3}$ alkyl, $C_{6-12}$ aryl or $C_{7-15}$ arylalkyl,

X =

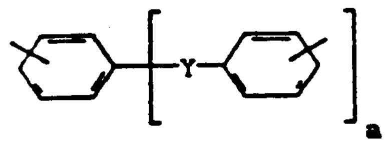

Y = $C_{1-3}$ alkylene,
-O-, -S-,

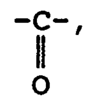

$-SO_2-$
or a single bond and

a = 0 or 1.

**2.** Blends as claimed in claim 1, characterized in that they contain
75 to 90% by weight polyalkylene terephthalate P and
25 to 10% by weight polymer Q.

**3.** Blends as claimed in claims 1 and 2, characterized in that they contain 0.1 to 1% by weight polyphosphonate.

**4.** Blends as claimed in claims 1 to 3, characterized in that the polyphosphonate contains recurring units corresponding to formula I in which

$R^1$ = methyl and

X = 1,4-phenylene, 4,4'-bisphenylene or $C_{1-3}$ alkylene bisphenylene.

**5.** Blends as claimed in claims 1 to 4, characterized in that they contain 0.1 to 2% by weight phenolic antioxidant.

**6.** Blends as claimed in claim 5, characterized in that the phenolic antioxidant corresponds to the formula

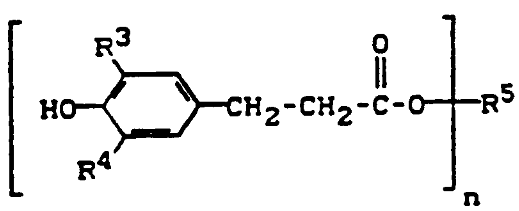

(II)

in which

$R^3$ = $C_{4-8}$ tert. alkyl,

$R^4$ = $C_{1-8}$ alkyl,

$R^5$ = $C_{8-18}$ alkyl or $C_{2-12}$ alkylene and

n = 1 or 2.

**7.** Blends as claimed in claim 6, characterized in that

$R^3$ and $R^4$ = tert. butyl, tert. amyl or tert. diisobutyl,

$R^5$ = $C_{17}H_{35}$ and

n = 1.

**8.** A process for the production of the blends claimed in claims 1 to 7 by melting of the components together.

**9.** The use of the blends claimed in claims 1 to 7 for the production of mouldings.

**Revendications**

**1.** Mélanges

de 65 à 99 % en poids de polyalkylènetéréphtalate P et

de 35 à 1 % en poids de polymérisat Q ayant l'élasticité du caoutchouc, présentant une température de transition vitreuse inférieure à -30 °C,

les indications de pourcentages se rapportant à la somme P + Q,

caractérisés en ce qu'ils contiennent 0,01 à 3 % en poids, par rapport à la somme P + Q, de polyphosphonate de viscosité relative ayant une valeur de 1,05 à 1,40 (mesurée sur une solution de 0,5 g de polyphosphonate dans 100 g de chlorure de méthylène à 25 °C) portant des motifs récurrents de formule

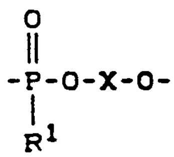

(I)

dans laquelle

$R^1$ est un groupe alkyle en $C_1$ à $C_3$, aryle en $C_6$ à $C_{12}$ ou arylalkyle en $C_7$ à $C_{15}$,

X représente

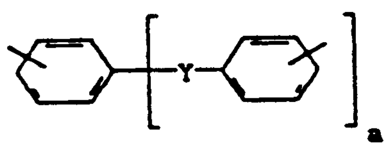

Y représente un groupe alkylène en $C_1$ à $C_3$,

-O-, -S-,

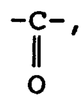

$-SO_2-$

ou une liaison simple et

a a la valeur 0 ou 1.

**2.** Mélanges suivant la revendication 1, caractérisés en ce qu'ils contiennent

75 à 90 % en poids de polyalkylènetéréphtalate P et

25 à 10 % en poids de polymérisat Q.

**3.** Mélanges suivant les revendications 1 et 2, caractérisés en ce qu'ils contiennent 0,1 à 1 % en poids de polyphosphonate.

**4.** Mélanges suivant les revendications 1 à 3, caractérisés en ce que le polyphosphonate contient des motifs récurrents de formule I dans laquelle

$R^1$ est un groupe méthyle et

X est un groupe 1,4-phénylène, 4,4'-bisphénylène ou (alkyle en $C_1$ à $C_3$)bisphénylène.

**5.** Mélanges suivant les revendications 1 à 4, caractérisés en ce qu'ils contiennent 0,1 à 2 % en poids d'anti-oxydant phénolique.

**6.** Mélanges suivant la revendication 5, caractérisés en ce que l'anti-oxydant phénolique répond à la formule

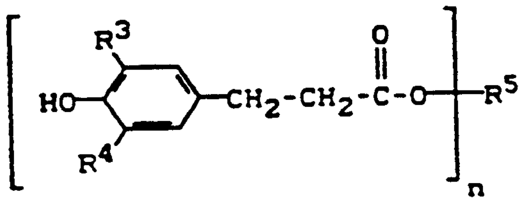

(II)

dans laquelle

$R^3$ est un groupe tertio-alkyle en $C_4$ à $C_8$,
$R^4$ est un groupe alkyle en $C_1$ à $C_8$,
$R^5$ est un groupe alkyle en $C_8$ à $C_{18}$ ou alkylène en $C_2$ à $C_{12}$ et
n a la valeur 1 ou 2.

**7.** Mélanges suivant la revendication 6, caractérisés en ce que

$R^3$, $R^4$ représentent un groupe tertio-butyle, tertio-amyle ou tertio-diisobutyle,
$R^5$ est un groupe $C_{17}H_{35}$ et
n est égal à 1.

**8.** Procédé de production des mélanges suivant les revendications 1 à 7 par fusion conjointe des composants.

**9.** Utilisation des mélanges suivant les revendications 1 à 7 pour la production de pièces moulées.